# EUROPEAN PATENT APPLICATION

(11) **EP 4 572 256 A1**
(43) Date of publication of application: **18.06.2025**
(21) Application number: 22954475.4
(22) Date of filing: 11.08.2022
(51) Int. Cl.: H04L 27/00

(54) **SIGNAL RECEIVING METHOD, SIGNAL SENDING METHOD, AND APPARATUS**

(71) Applicant: FUJITSU LIMITED, Kawasaki-shi, Kanagawa 211-8588 (JP)
(72) Inventor: ZHANG, Jian, Beijing 100022 (CN); ZHAO, Di, Beijing 100022 (CN); SUN, Gang, Beijing 100022 (CN); WANG, Xin, Beijing 100022 (CN)
(74) Representative: Haseltine Lake Kempner LLP
(86) International application number: PCT/CN2022/111654
(87) International publication number: WO 2024/031505

(57) **Abstract**

Embodiments of the present disclosure provide a signal reception method, a signal transmission method and apparatus, the signal reception method including: a terminal equipment receives downlink control information (DCI), the DCI indicating one or two transmission configuration indication (TCI) state(s); and the terminal equipment receives physical downlink control channels (PDCCHs) linked with one or two TCI states within application times of the one or two TCI state(s). Thereby, when the terminal equipment receives PDCCHs within application times of two TCI states or receives a PDCCH repetition within application times of one or two TCI state(s), occurrence of an undefined device behavior may be avoided, so as to avoid resulting PDCCH receiving failures.

## Description

### TECHNICAL FIELD

Embodiments of the present disclosure relate to the technical field of communications.

### BACKGROUND

3GPP Standardization Organization carried out standardization related work for unified transmission configuration indications (TCIs) during standardization of release-17 (Rel-17). The unified TCI in Rel-17 is designed mainly for a single transmission and reception point (sTRP) scenario.

With the advancement of standardization work, multiple transmission and reception point (mTRP) has become an important scenario of a 5G NR system, and the purpose of improving throughput and/or improving reliability can be achieved through mTRP-based transmission.

In previous standardization work, in Rel-16, transmission of an mTRP-based physical downlink shared channel (PDSCH) was standardized; in Rel-17, transmissions of an mTRP-based physical downlink control channel (PDCCH), a physical uplink shared channel (PUSCH) and a physical uplink control channel (PUCCH) were standardized. mTRP transmission includes mTRP transmission based on single downlink control information (sDCI) (sDCI mTRP) and mTRP transmission based on multiple DCI (mDCI) (mDCI mTRP). For the sDCI mTRP, uplink and downlink transmissions of two TRPs is scheduled by one DCI, which is more suitable for a case in which backhaul between TRPs is more ideal. For the mDCI mTRP, two TRPs use two DCIs to respectively schedule uplink and downlink transmissions of their respective TRPs, which is more suitable for a case in which the backhaul between TRPs is not very ideal.

It should be noted that the above introduction to the technical background is just to facilitate a clear and complete description of the technical solutions of the present disclosure, and is elaborated to facilitate the understanding of persons skilled in the art, it cannot be considered that these technical solutions are known by persons skilled in the art just because these solutions are elaborated in the Background of the present disclosure.

### SUMMARY OF INVENTION

The inventor finds that when a terminal equipment receives a PDCCH based on a unified TCI in mTRP, the following situations is encountered:
PDCCH reception needs to be based on a TCI state and there are two TCI states within an application time where the PDCCH reception is located;
PDCCH reception needs to be based on two TCI states and there is one TCI state within an application time where the PDCCH reception is located; and
PDCCH reception needs to be based on two TCI states and there are two TCI states within an application time where the PDCCH reception is located.

In the above situations, how to receive the PDCCH is an unresolved problem. If it is not resolved, PDCCH reception failure is caused when the above situations are encountered for the terminal equipment.

For at least one of the above problems, the embodiments of the present disclosure provide a signal reception method, a signal transmission method and apparatus.

According to an aspect of the embodiments of the present disclosure, a signal reception method is provided, the method including:
a terminal equipment receives DCI, the DCI indicating one or two TCI state(s); and
the terminal equipment receives PDCCHs linked with one or two TCI state(s) within application times of the one or two TCI state(s).

According to another aspect of the embodiments of the present disclosure, a signal transmission method is provided, the method including:
a network device transmits DCI, the DCI indicating one or two TCI state(s); and
the network device transmits PDCCHs linked with one or two TCI state(s) within application times of the one or two TCI state(s).

According to a further aspect of the embodiments of the present disclosure, a signal reception apparatus is provided, the apparatus including:
a first receiving unit configured to receive DCI, the DCI indicating one or two TCI state(s); and
a second receiving unit configured to receive PDCCHs linked with one or two TCI state(s) within application times of the one or two TCI state(s).

According to still a further aspect of the embodiments of the present disclosure, a signal transmission apparatus is provided, configured in a network device, the apparatus including:
a first transmitting unit configured to transmit DCI, the DCI indicating one or two TCI state(s); and
a second transmitting unit configured to transmit PDCCHs linked with one or two TCI state(s) within application times of the one or two TCI state(s).

One of advantageous effects of the embodiments of the present disclosure lies in: a terminal equipment receives PDCCHs linked with one or two TCI state(s) within application times of the one or two TCI state(s) indicated by DCI. Thereby, an undefined device behavior, when the terminal equipment receives PDCCHs within application times of two TCI states or receives a PDCCH repetition within application times of one or two TCI state(s), may be avoided, so as to avoid resulting PDCCH receiving failures.

Referring to the later description and drawings, specific implementations of the present disclosure are disclosed in detail, indicating a mode that the principle of the present disclosure may be adopted. It should be understood that the implementations of the present disclosure are not limited in terms of a scope. Within the scope of the terms of the attached claims, the implementations of the present disclosure include many changes, modifications and equivalents.

Features that are described and/or shown for one implementation may be used in the same way or in a similar way in one or more other implementations, may be combined with or replace features in the other implementations.

It should be emphasized that the term "comprise/include" when being used herein refers to presence of a feature, a whole piece, a step or a component, but does not exclude presence or addition of one or more other features, whole pieces, steps or components.

### BRIEF DESCRIPTION OF DRAWINGS

An element and a feature described in a drawing or an implementation of the embodiments of the present disclosure may be combined with an element and a feature shown in one or more other drawings or implementations. In addition, in the drawings, similar labels represent corresponding components in several drawings and may be used to indicate corresponding components used in more than one implementation.
FIG. 1 is a schematic diagram of a communication system in the embodiments of the present disclosure;
FIG. 2 is a schematic diagram of an application time of at least one DL TCI state indicated by DL DCI, for a unified TCI;
FIG. 3 is a schematic diagram of a signal reception method in the embodiments of the present disclosure;
FIG. 4 is a schematic diagram of an example in which a terminal equipment receives a PDCCH;
FIG. 5 is a schematic diagram of another example in which a terminal equipment receives a PDCCH;
FIG. 6 is a schematic diagram of a further example in which a terminal equipment receives a PDCCH;
FIG. 7 is a schematic diagram of still a further example in which a terminal equipment receives a PDCCH;
FIG. 8 is a schematic diagram of still a further example in which a terminal equipment receives a PDCCH;
FIG. 9 is a schematic diagram of an example of an MAC CE;
FIG. 10 is a schematic diagram of an example of CORESET configuration;
FIG. 11 is a schematic diagram of a signal transmission method in the embodiments of the present disclosure;
FIG. 12 is a schematic diagram of a signal reception apparatus in the embodiments of the present disclosure;
FIG. 13 is a schematic diagram of a signal transmission apparatus in the embodiments of the present disclosure;
FIG. 14 is a schematic diagram of composition of a terminal equipment in the embodiments of the present disclosure;
FIG. 15 is a schematic diagram of composition of a network device in the embodiments of the present disclosure.

### DETAILED DESCRIPTION

Referring to the drawings, through the following Specification, the aforementioned and other features of the present disclosure will become obvious. The Specification and the drawings specifically disclose particular implementations of the present disclosure, showing partial implementations which may adopt the principle of the present disclosure. It should be understood that the present disclosure is not limited to the described implementations, on the contrary, the present disclosure includes all the modifications, variations and equivalents falling within the scope of the attached claims.

In the embodiments of the present disclosure, the term "first" and "second", etc. are used to distinguish different elements in terms of appellation, but do not represent a spatial arrangement or time sequence, etc. of these elements, and these elements should not be limited by these terms. The term "and/or" includes any and all combinations of one or more of the associated listed terms. The terms "include", "comprise" and "have", etc. refer to the presence of stated features, elements, members or components, but do not preclude the presence or addition of one or more other features, elements, members or components.

In the embodiments of the present disclosure, the singular forms "a/an" and "the", etc. include plural forms, and should be understood broadly as "a kind of" or "a type of", but are not defined as the meaning of "one"; in addition, the term "the" should be understood to include both the singular forms and the plural forms, unless the context clearly indicates otherwise. In addition, the term "according to" should be understood as "at least partially according to......", the term "based on" should be understood as "at least partially based on......", unless the context clearly indicates otherwise.

In the embodiments of the present disclosure, the term "a communication network" or "a wireless communication network" may refer to a network that meets any of the following communication standards, such as Long Term Evolution (LTE), LTE-Advanced (LTE-A), Wideband Code Division Multiple Access (WCDMA), High-Speed Packet Access (HSPA), 5 Generation (5G) New Radio (NR) and so on.

And, communication between devices in a communication system can be carried out according to a communication protocol at any stage, for example may include but be not limited to the following communication protocols: 1G, 2G, 2.5G, 2.75G, 3G, 4G, 4.5G, 5G New Radio (NR) and so on, and/or other communication protocols that are currently known or will be developed in the future.

In the embodiments of the present disclosure, the term "a network device" refers to, for example, a device that accesses a terminal equipment in a communication system to a communication network and provides services to the terminal equipment. The network device may include but be not limited to the following devices: a Base Station (BS), an Access Point (AP), a Transmission Reception Point (TRP), a broadcast transmitter, a Mobile Management Entity (MME), a gateway, a server, a Radio Network Controller (RNC), a Base Station Controller (BSC) and so on.

The base station may include but be not limited to: node B (NodeB or NB), evolution node B (eNodeB or eNB) and a 5G base station (gNB), etc., and may further includes Remote Radio Head (RRH), Remote Radio Unit (RRU), a relay or a low power node (such as femeto, pico, etc.). And the term "base station" may include their some or all functions, each base station may provide communication coverage to a specific geographic region. The term "cell" may refer to a base station and/or its coverage area, which depends on the context in which this term is used.

In the embodiments of the present disclosure, the term "User Equipment (UE)" or "Terminal Equipment (TE) or Terminal Device" refers to, for example, a device that accesses a communication network and receives network services through a network device. The terminal equipment may be fixed or mobile, and may also be referred to as Mobile Station (MS), a terminal, Subscriber Station (SS), Access Terminal (AT) and a station and so on.

The terminal equipment may include but be not limited to the following devices: a Cellular Phone, a Personal Digital Assistant (PDA), a wireless modem, a wireless communication device, a handheld device, a machine-type communication device, a laptop computer, a cordless phone, a smart phone, a smart watch, a digital camera and so on.

For another example, under a scenario such as Internet of Things (IoT), the terminal equipment may also be a machine or apparatus for monitoring or measurement, for example may include but be not limited to: a Machine Type Communication (MTC) terminal, a vehicle-mounted communication terminal, a Device to Device (D2D) terminal, a Machine to Machine (M2M) terminal and so on.

Moreover, the term "a network side" or "a network device side" refers to a side of a network, may be a base station, and may include one or more network devices as described above. The term "a user side" or "a terminal side" or "a terminal equipment side" refers to a side of a user or terminal, may be a UE, and may include one or more terminal equipments as described above. If it is not specifically mentioned herein, "a device" may refer to a network device, or may refer to a terminal equipment.

Scenarios of the embodiments of the present disclosure are described via the following examples, however the present disclosure is not limited to these.

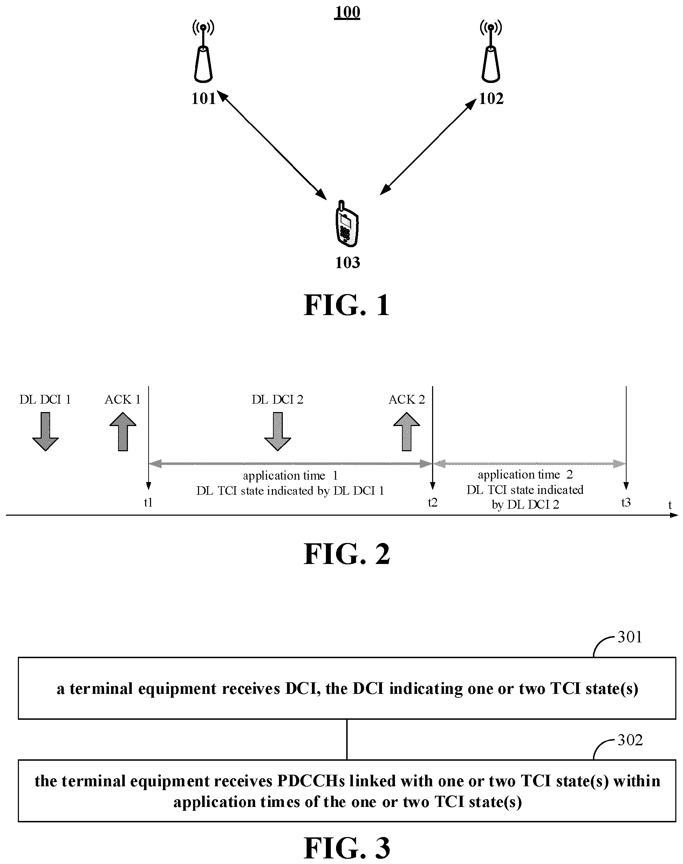

FIG. 1 is a schematic diagram of a communication system in the embodiments of the present disclosure, schematically describes situations by taking a terminal equipment and a network device as examples. As shown in FIG. 1, a communication system 100 may include a first TRP 101, a second TRP 102 and a terminal equipment 103. The first TRP 101 and the second TRP 102 may be network devices. For simplicity, FIG. 1 only takes two TRPs (network devices) and one terminal equipment as examples for description, however the embodiments of the present disclosure are not limited to this.

In the embodiments of the present disclosure, transmission of existing or further implementable services can be carried out among the first TRP 101, the second TRP 102 and the terminal equipment 103. For example, these services may include but be not limited to: enhanced Mobile Broadband (eMBB), massive Machine Type Communication (mMTC), Ultra-Reliable and Low-Latency Communication (URLLC) and so on.

In Rel-17, for a unified TCI, in the sTRP scenario, a network device configures M (M≥1) TCI states for a terminal equipment by using RRC signaling, activates N (1≤N≤M) TCI states in the M TCI states by using an MAC CE (Media Access Control Control Element), and indicates L (1≤L≤N) TCI states in the N TCI states by using DCI. For example, a TCI field in DCI format 1_1 or DCI format 1_2 indicates one or more TCI state(s). DCI format 1_1 or DCI format 1_2 may schedule downlink data, called DCI format 1_1/1_2 with DL assignment, or may not schedule downlink data, called DCI format 1_1/1_2 without DL assignment.

A TCI state (TCI for short) may include or correspond to one or two source reference signals (source RS). The source reference signal may provide quasi co-location (QCL) information for downlink reception, which is called a downlink source reference signal. The source reference signal may provide reference for an uplink transmission spatial filter (UL TX spatial filter), which is called an uplink source reference signal.

In addition, the source reference signal may provide beam information for a destination channel/signal. For example, a beam used by the terminal equipment to receive the destination channel/signal is the same as a beam used to receive the downlink source reference signal. For another example, a beam used by the terminal equipment to transmit the destination channel/signal is the same as a beam used to transmit the uplink source reference signal. For a further example, a beam used by the terminal equipment to transmit the destination channel/signal has reciprocity with a beam used to receive the downlink source reference signal, i.e., beams are the same, but directions are opposite. Thus, indicating or updating for TCI state actually also includes indicating or updating for a beam used by the terminal equipment.

In addition, the TCI state includes a joint TCI state (joint DL/UL TCI state), a downlink TCI state (DL only TCI state) and an uplink TCI state (UL only TCI state). The source reference signal included in the downlink TCI state is a downlink source reference signal, the source reference signal included in the uplink TCI state is an uplink source reference signal, and the source reference signal included in the joint TCI state is both the downlink source reference signal and the uplink source reference signal.

The joint TCI state acts simultaneously on a downlink beam (a receiving beam) and an uplink beam (a transmitting beam). In other words, the downlink beam and the uplink beam use the same beam, but beam directions are opposite, that is, there is reciprocity between the downlink beam and the uplink beam. Downlink TCI state only acts on the downlink beam. Uplink TCI state only acts on the uplink beam. Uplink beam is also called an uplink transmission spatial filter.

The TCI field may indicate the joint TCI state (joint DL/UL TCI state), or the TCI field may indicate a separate TCI state (separate DL/UL TCI state), that is, indicates a downlink TCI state and/or an uplink TCI state, wherein, indicating the joint TCI state or indicating the separate TCI state may be configured via RRC signaling. For a unified TCI in Rel-17, a TCI field indicates a joint TCI state (corresponding to indicating both a downlink TCI state and an uplink TCI state), or indicates a downlink TCI state, or indicates an uplink TCI state, or indicates a downlink TCI state and an uplink TCI state.

FIG. 2 is a schematic diagram of an application time of at least one DL TCI state indicated by DL DCI, for a unified TCI. The DL TCI state may be a joint DL/UL TCI state or a separate DL/UL TCI state.

As shown in FIG. 2, the terminal equipment receives DL DCI 1 indicating at least one DL TCI state, wherein the DL TCI state indicated by DL DCI 1 is different (including a different number of DL TCI states) from a DL TCI state indicated by a previous DL DCI (e.g. DL DCI 0, not shown in the figure). The terminal equipment transmits ACK (ACK 1) for DL DCI 1 to the network device. DL DCI 1 may be either a DCI format that schedules a PDSCH or a DCI format that does not schedule a PDSCH (DCI format without DL assignment). The first slot applying the DL TCI state indicated by DL DCI 1 is a first slot after Y symbols after the last symbol of ACK1, a starting time of this slot is denoted as t1. Assuming that DL DCI 2 is a DL DCI after DL DCI 1, in which the first indicated DL TCI state is different from a DL TCI state indicated by DL DCI 1, a first slot applying a DL TCI state indicated by DL DCI 2 may be determined using the same method, a starting time of this slot is denoted as t2. An application time (application time 1) of the DL TCI state indicated by DL DCI 1 includes all slots between t1 and t2. In other words, a DL TCI state that takes effect within the application time 1 is indicated by DL DCI 1. Similarly, the application time (application time 2) of the DL TCI state indicated by DL DCI 2 may be expressed as all slots between t2 and t3, wherein t3 corresponds to a first slot applying DL TCI state which is different from the DL TCI state indicated by DL DCI 2, this different DL TCI state is indicated by DL DCI 3 (not shown in the figure) positioned after DL DCI 2. To avoid an out-of-order situation occurred in a downlink HARQ, for DL DCI 2 positioned after DL DCI 1, its linked ACK 2 is positioned after ACK 1, and cannot be positioned before ACK 1.

The inventor noticed that in Rel-17, the unified TCI is only applicable to the sTRP scenario. Considering the importance of mTRP, it is necessary to design a corresponding unified TCI mechanism for the mTRP scenario. 3GPP will standardize unified TCIs of mTRP in Rel-18. Currently, the unified TCI of mTRP has been determined as one of the item contents of Rel-18, and the standardization work of Rel-18 has not begun yet. Functionally speaking, the unified TCI of mTRP needs to be able to indicate TCI states of two TRPs, so as to support mTRP PDSCH transmission, and also to be able to indicate a TCI state of one TRP, so as to support sTRP PDSCH transmission.

In addition, Rel-17 standardizes PDCCH repetition and SFN (Single Frequency Network) PDCCHs.

For the PDCCH repetition, two linked PDCCH candidates come from two CORESET (control resource sets) and carry the same control information. Each CORESET is configured with a DL TCI state. Two PDCCH copies are transmitted using two DL TCI states of two CORESETs, for example, are transmitted by two TRPs.

For the SFN PDCCH, two TRPs transmit exactly the same PDCCH on the same time-frequency resource, including DMRS of the same PDCCH, and these two PDCCHs come from one CORESET. This CORESET is configured with two DL TCI states. Two PDCCHs are transmitted using two DL TCI states of one CORESET.

In Rel-17, only unified TCI of sTRP is standardized. Since the PDCCH repetition and the SFN PDCCH may be applied to the mTRP scenario and belong to mTRP PDCCH, neither the PDCCH repetition nor the SFN PDCCH in Rel-17 use the unified TCI.

In Rel-17, for a unified TCI of sTRP, a PDCCH is linked with one TCI state (that is, a terminal equipment needs to receive the PDCCH based on one TCI state), and one TCI state exists within a certain application time of the unified TCI. The terminal equipment will receive the PDCCH in the following situations:
Situation 1: the terminal equipment receives a PDCCH linked with one TCI state within an application time of one TCI state.

In Rel-18, the unified TCI of mTRP needs to be standardized. For the unified TCI of mTRP, a PDCCH is linked with one or two TCI states (for example, PDCCH repetition is linked with two TCI states, that is, the terminal equipment needs to receive the PDCCH repetition based on two TCI states), and there are one or two TCI states (two TCI states are linked with two TRPs respectively) within a certain application time of the unified TCI. The terminal equipment will receive the PDCCH in the following situations:
Situation 1: the terminal equipment receives a PDCCH linked with one TCI state within an application time of one TCI state;
Situation 2: the terminal equipment receives a PDCCH linked with one TCI state within application times of two TCI states;
Situation 3: the terminal equipment receives a PDCCH linked with two TCI states within an application time of one TCI state; and
Situation 4: the terminal equipment receives a PDCCH linked with two TCI states within application times of two TCI states.

That is, compared with the unified TCI of sTRP in Rel-17, situations 2 to 4 are new scenarios for Rel-18. How the terminal equipment receives a PDCCH under new scenarios 2 to 4 is a problem that needs to be solved. If it is not solved, a behavior that the terminal equipment receives the PDCCH will be uncertain, resulting in PDCCH reception failure.

For at least one of the above problems, the embodiments of the present disclosure provide a signal reception method, a signal transmission method and apparatus. The embodiments of the present disclosure are described below in conjunction with the drawings and the specific implementations.

In the following description, unless otherwise specified, the TCI state refers to a DL TCI state. The DL TCI state may be either a DL only TCI state or a joint TCI state. For receiving a PDCCH, "receive" is equivalent to "monitor" and "blind decode", they may be replaced with each other; "receive a PDCCH based on a TCI state" is equivalent to "receive a PDCCH using a TCI state", they may be replaced with each other; "use a unified TCI" is equivalent to "follow a unified TCI", they may be replaced with each other; "receive PDCCH repetition", "monitor two linked PDCCH candidates", "receive two PDCCH copies" are equivalent to each other and may be replaced with each other; for PDCCH repetition, "two linked PDCCH candidates" is equivalent to "two PDCCH copies", they may be replaced with each other; a CORESET may be replaced with a search space set; "configure" may refer to configure via RRC signaling, or configure via an MAC CE; "a PDCCH linked with one TCI state" is equivalent to "an sTRP PDCCH" or "a PDCCH", they may be replaced with each other; "a PDCCH linked with two TCI states" is equivalent to "PDCCH repetition", they may be replaced with each other. In addition, the embodiments of the present disclosure are applicable to both the sDCI mTRP scenario and the mDCI mTRP scenario.

### Embodiments of a first aspect

The embodiments of the present disclosure provide a signal reception method, applied in a terminal equipment side.

FIG. 3 is a schematic diagram of a signal reception method in the embodiments of the present disclosure. As shown in FIG. 3, the method includes:
301, a terminal equipment receives DCI, the DCI indicating one or two TCI state(s); and
302, the terminal equipment receives PDCCHs linked with one or two TCI state(s) within application times of the one or two TCI state(s).

It should be noted that the above FIG. 3 is only schematic description of the embodiments of the present disclosure, by taking the terminal equipment as an example, but the present disclosure is not limited to this. For example, an execution step of each operation may be adjusted appropriately, moreover other some operations may be increased or operations therein may be reduced. In addition, objects of the above operations may further be adjusted. Persons skilled in the art may make appropriate modifications according to the above contents, not limited to the records in the above FIG. 3.

In the embodiments of the present disclosure, in a case where a PDCCH uses a unified TCI, if the terminal equipment receives the PDCCH within a certain application time, the terminal equipment should receive the PDCCH based on a TCI state within the application time. However, it is possible that a situation may be occurred where the number of TCI states required to receive the PDCCH is inconsistent with the number of TCI states within the application time (situations 2 to 4 as described above). In such situation, how to receive the PDCCH based on a TCI state is unclear and undefined, which will result in an undefined device behavior, thereby causing PDCCH reception failure.

According to the embodiments of the present disclosure, for different combinations of a PDCCH type (PDCCH or PDCCH repetition) and the number of TCI states (one or two) within an application time, the terminal equipment receives some or all of the PDCCHs based on some or all of TCI states. Thereby, when the terminal equipment receives PDCCHs within application times of two TCI states or receives a PDCCH repetition within application times of one or two TCI state(s), occurrence of an undefined device behavior may be avoided, so as to avoid resulting PDCCH receiving failures.

The method in the embodiments of the present disclosure is described below respectively by taking situations 2 to 4 as an example.

By taking the situation 2 as an example:
For a common PDCCH (i.e., non-PDCCH repetition or non-SFN PDCCH), a PDCCH is received based on one TCI state. When the PDCCH is within application times of two TCI states, the terminal equipment does not know how to receive the PDCCH based on the two TCI states. Uncertainty of a receiving behavior of the terminal equipment may possibly lead to PDCCH reception failure. "PDCCH is non-PDCCH repetition or non-SFN PDCCH", "PDCCH is not PDCCH repetition or SFN PDCCH", "PDCCH is neither PDCCH repetition nor SFN PDCCH", "PDCCH is sTRP PDCCH", "a terminal equipment is not configured with PDCCH repetition or SFN PDCCH", "a terminal equipment is neither configured with PDCCH repetition nor SFN PDCCH" are equivalent, they may be replaced with each other.

For the above problem, if the terminal equipment is not configured with PDCCH repetition or SFN PDCCH, when a PDCCH is within application times of two TCI states, the terminal equipment may receive the PDCCH based on the following embodiments.

In some embodiments, the terminal equipment receives a PDCCH based on one TCI state in the two TCI states. The one TCI state may be a pre-defined TCI state or a TCI state configured for a CORESET where the PDCCH is located.

That is, in the above embodiments, if the PDCCH is a non-PDCCH repetition or a non-SFN PDCCH, and the PDCCH is located within application times of two TCI states, the terminal equipment receives the PDCCH based on one of the two TCI states.

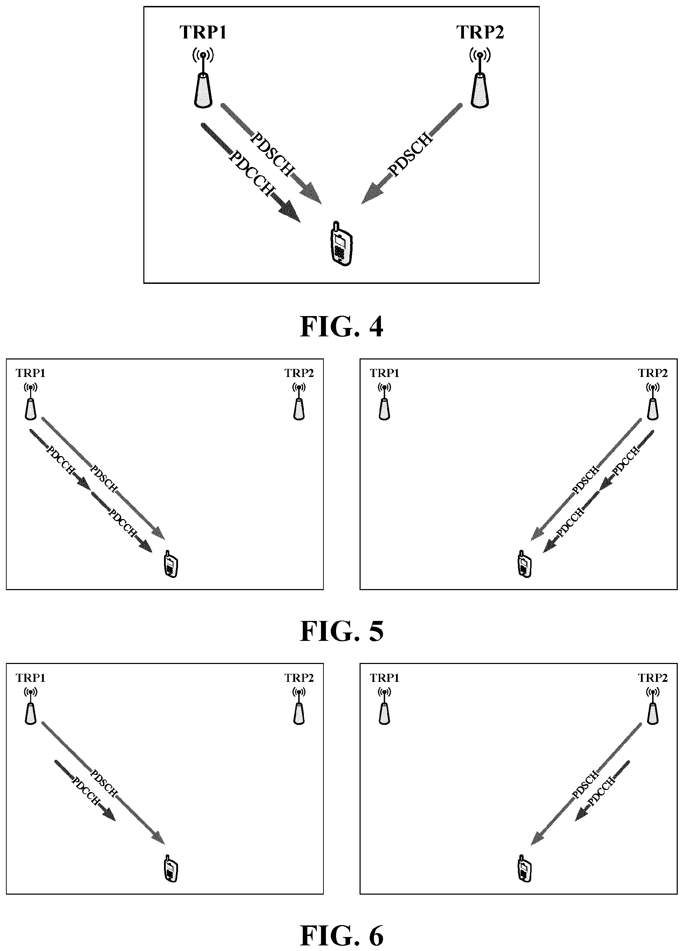

For example, as shown in FIG. 4, a PDSCH comes from TRP1 and TPR2, i.e. an mTRP PDSCH, and a PDCCH comes from TRP1, i.e. an sTRP PDCCH. For the mTRP PDSCH, there exists two TCI states in an application time, being linked with two TRPs respectively. For the sTRP PDCCH, only one TCI state is required for PDCCH reception within this application time, and the terminal equipment determines one TCI state in the two TCI states.

The terminal equipment may determine one TCI state in a predefined manner, for example, by using a predefined (default) TCI state, this TCI state is a first or second TCI state; or, the terminal equipment may determine one TCI state in a configuring manner, for example, whether to use a first or second TCI state is configured for a CORESET. Here, the configuration is performed by taking the CORESET as granularity, and for each CORESET, it is configured to use the first or second TCI state in a case where two TCI states exist. The configuration may further be performed by taking a search space set as granularity, that is, the above CORESET may be replaced with a search space set.

In some other embodiments, the terminal equipment receives a PDCCH based on two TCI states in a manner of receiving an SFN PDCCH.

That is, in the above embodiments, if the PDCCH is a non-PDCCH repetition or a non-SFN PDCCH, and the PDCCH is located within application times of two TCI states, the terminal equipment receives the PDCCH based on said two TCI states in a manner of receiving an SFN PDCCH.

For example, although the terminal equipment is not configured with a PDCCH repetition or an SFN PDCCH, when the terminal equipment needs to receive a PDCCH within application times of two TCI states, the terminal equipment considers that it is switched to SFN PDCCH reception, thereby the terminal equipment receives the PDCCH in a manner of receiving the SFN PDCCH. It should be noted that this switching is not explicitly configured by a network device, but is obtained in an implicit way, that is, based on a change in the number of TCI states.

In the above embodiments, in some implementations, when receiving the PDCCH in a manner of receiving the SFN PDCCH, the terminal equipment uses a predefined SFN PDCCH scheme.

For example, the SFN PDCCH includes two schemes i.e., sfnSchemeA and sfnSchemeB. Since the network device does not explicitly configure the SFN PDCCH, the terminal equipment performs SFN PDCCH reception by using a predefined (default) scheme, this scheme is sfnSchemeA or sfnSchemeB.

By taking the situation 3 as an example:
For the PDCCH repetition, two TCI states are needed, respectively corresponding to two linked PDCCH candidates (or PDCCH copies). When two PDCCH candidates are within an application time of one TCI state, the terminal equipment does not know how to receive the PDCCH based on the one TCI state. Uncertainty of a receiving behavior of the terminal equipment may possibly lead to PDCCH reception failure.

For the above problem, if the terminal equipment is configured with the PDCCH repetition, when two PDCCH copies are within an application time of one TCI state, the terminal equipment may receive a PDCCH based on the following embodiments.

In some embodiments, the terminal equipment receives two PDCCH copies in two CORESETs based on one TCI state.

That is, if the PDCCH includes two PDCCH copies, and these two PDCCH copies are within an application time of one TCI state, the terminal equipment receives two PDCCH copies in two CORESETs associated with these two PDCCH copies based on one TCI state.

For example, as shown in FIG. 5, the PDSCH comes from one TRP (TPR1 or TPR2), so one TCI state exists within an application time. For a terminal equipment configured with the PDCCH repetition, although it expects to receive two PDCCH copies based on two TCI states, only one TCI state is available within an application time. In this situation, the terminal equipment receives two PDCCH copies using one TCI state. As shown in FIG. 5, it is equivalent to that two PDCCH copies come from the same one TRP. If the terminal equipment receives two PDCCH copies from two TRPs before, it is equivalent to that PDCCH repetitions of two TRPs (mTRPs) are switched to PDCCH repetitions of one TRP (sTRP).

In some other embodiments, the terminal equipment receives one PDCCH copy in one CORESET based on one TCI state.

That is, if the PDCCH includes two PDCCH copies, and these two PDCCH copies are within an application time of one TCI state, the terminal equipment receives one PDCCH copy in one of two CORESETs linked with these two PDCCH copies based on one TCI state.

For example, as shown in FIG. 6, the terminal equipment receives one PDCCH copy in one CORESET by using one TCI state, which is equivalent to switching from a PDCCH repetition to an sTRP PDCCH (non-PDCCH repetition). The terminal equipment receives a PDCCH only in one of two CORESETs, and from the point of view of a network device, time-frequency resources of the other CORESET are released and may be used to transmit other channels or signals, which improves a resource utilization rate.

In the above embodiments, in some implementations, the one CORESET refers to one of the following:
a CORESET with a smaller ID in the two CORESETs;
a CORESET with an earlier starting time in the two CORESETs; and
a CORESET with a lower starting frequency in the two CORESETs.

For example, the terminal equipment receives one PDCCH copy in one CORESET based on one TCI state, the one CORESET is a CORESET with a smaller ID, or an earlier starting time, or a lower starting frequency in the two CORESETs. Without loss of generality, the above one CORESET may further be a CORESET with a larger ID, or a later starting time, or a higher starting frequency in the two CORESETs.

By taking the situation 4 as an example:
For the PDCCH repetition, two TCI states are needed, respectively corresponding to two linked PDCCH candidates. When two PDCCH candidates are within application times of two TCI states, the terminal equipment receives the PDCCH repetition based on the two TCI states. However, how two CORESETs are linked with the two TCI states is not defined. More specifically, the terminal equipment does not know in which CORESET it receives the PDCCH based on a first TCI state and in which CORESET it receives the PDCCH based on a second TCI state. Uncertainty of a receiving behavior of the terminal equipment may possibly lead to PDCCH reception failure.

For the above problem, if the terminal equipment is configured with the PDCCH repetition, when two PDCCH copies are within application times of two TCI states, the terminal equipment may receive a PDCCH based on the following embodiments.

In some embodiments, the terminal equipment receives the first PDCCH copy in a first CORESET based on a first TCI state, and receives the second PDCCH copy in a second CORESET based on a second TCI state.

That is, if the PDCCH includes two PDCCH copies, and these two PDCCH copies are within application times of two TCI states, the terminal equipment receives one PDCCH copy in the first CORESET based on one of the two TCI states (called the first TCI state), and receive the other PDCCH copy in the second CORESET based on the other one of the two TCI states (called the second TCI state).

The first CORESET is one of the following:
a CORESET with a smaller ID in two CORESETs;
a CORESET with an earlier starting time in the two CORESETs; and
a CORESET with a lower starting frequency in the two CORESETs;
the second CORESET is one of the following:
   a CORESET with a larger ID in two CORESETs;
   a CORESET with a later starting time in the two CORESETs; and
   a CORESET with a higher starting frequency in the two CORESETs.

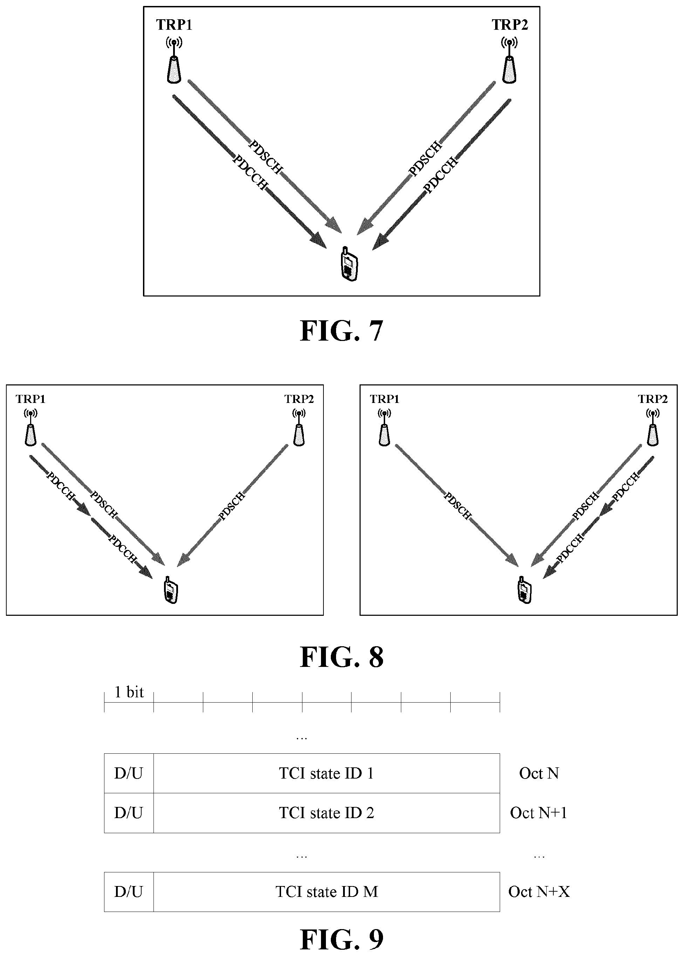

For example, as shown in FIG. 7, the PDSCH comes from TRP1 and TPR2, there exists two TCI states in an application time, being linked with two TRPs respectively. For a PDCCH repetition within this application time, two PDCCH copies come from two TRPs, and the terminal equipment receives the PDCCH repetition based on two TCI states within the application time. Two PDCCH copies come from two CORESETs. The terminal equipment may receive the first PDCCH copy in a CORESET with a smaller ID based on a first TCI state, and receive the second PDCCH copy in a CORESET with a larger ID based on a second TCI state, vice versa. Similarly, "smaller or larger ID" may be replaced with "earlier or later starting time", or may be replaced with "lower or higher starting frequency".

The above disclosure are illustrative only, and in some other implementations, the first CORESET may further be a CORESET with a larger ID or a later starting time or a higher starting frequency in two CORESETs. Correspondingly, the second CORESET may be a CORESET with a smaller ID or a earlier starting time or a lower starting frequency in two CORESETs.

In some further embodiments, the terminal equipment receives the first PDCCH copy in a first CORESET based on a first TCI state, and receives the second PDCCH copy in a second CORESET based on a second TCI state, wherein the first CORESET is configured to be linked with the first TCI state, and the second CORESET is configured to be linked with the second TCI state.

That is, if the PDCCH includes two PDCCH copies, and these two PDCCH copies are within application times of two TCI states, the terminal equipment receives one PDCCH copy in the first CORESET based on the first TCI state in the two TCI states, and receive the other PDCCH copy in the second CORESET based on the second TCI state in the two TCI states.

For example, a network device configures for each CORESET which TCI state the CORESET is linked with, so that two CORESETs may be linked with two TCI states respectively, thereby the terminal equipment can know in which CORESET a PDCCH copy should be received based on one TCI state.

In some further embodiments, the terminal equipment receives two PDCCH copies in two CORESETs based on one TCI state, wherein the one TCI state is a pre-defined TCI state or a TCI state configured for a CORESET where the PDCCH is located.

That is, if the PDCCH includes two PDCCH copies, and these two PDCCH copies are within application times of two TCI states, the terminal equipment receives the two PDCCH copies in two CORESETs linked with these two PDCCH copies based on one of the two TCI states (such as a predefined TCI state, or a TCI state configured for a CORESET where the PDCCH is located).

For example, as shown in FIG. 8, the PDSCH comes from TRP1 and TPR2, there exists two TCI states in an application time, being linked with two TRPs respectively, i.e., the PDSCH is transmitted and received in an mTRP manner. However, the PDCCH repetition is transmitted and received in an sTRP manner, i.e., two PDCCH copies come from the same one TRP. The terminal equipment receives a PDCCH repetition based on one of the two TCI states. The terminal equipment may determine one TCI state from the two TCI states in the same way as that for the situation 2, which is not repeated here anymore. Although the PDSCH transmission may switch between mTRP and sTRP, the PDCCH repetition always employs sTRP manner, which helps to ensure robustness of a control channel.

In each of the above embodiments, at least two TCI states are activated by an MAC CE for the terminal equipment, the DCI indicates two TCI states therein, the first TCI state may be a TCI state with a smaller field ID or TCI state ID in the MAC CE, and the second TCI state may be a TCI state with a larger field ID or TCI state ID in the MAC CE.

For example, FIG. 9 shows an example of MAC CE, only showing a TCI state-related part, one MAC CE field includes 8 bits, the field ID is shown as Oct 1, Oct 2, ......, Oct N+X in FIG. 9, and the TCI state ID is shown as TCI state ID 1, TCI state ID 2, ......, TCI state ID M in FIG. 9. If the DCI indicates two TCI states, it indicates two TCI states in Oct N to Oct N+X (that is, TCI state ID 1 to TCI state ID M, M=X+1) in FIG. 9, the first TCI state is a TCI state with a smaller field ID, the second TCI state is a TCI state with a larger field ID, or, the first TCI state is a TCI state with a smaller TCI state ID, and the second TCI state is a TCI state with a larger TCI state ID.

The above embodiments are illustrative only, the present disclosure is not limited to these, the first TCI state may further be a TCI state with a larger field ID or a larger TCI state ID in the MAC CE, and correspondingly, the second TCI state is a TCI state with a smaller field ID or a smaller TCI state ID in the MAC CE.

In each of the above embodiments, one CORESET may be configured with whether to use a unified TCI. If the terminal device is configured with a PDCCH repetition, whether two linked CORESETs use a unified TCI must meet certain restricted conditions.

In some implementations, if the terminal device is configured with a PDCCH repetition, two linked CORESETs both use a unified TCI, or do not use a unified TCI.

For example, two CORESETs for the PDCCH repetition are each configured with whether to use a unified TCI, but the two CORESETs both are configured to use a unified TCI, or both are configured not to use a unified TCI.

For another example, in the two CORESETs for the PDCCH repetition, only one CORESET is configured with whether to use a unified TCI, and the other CORESET, is considered to have the same configuration as its linked CORESET although it is not explicitly configured.

In each of the above embodiments, the network device may further configure, via CORESET configuration, the terminal equipment to use which method to receive a PDCCH. For example, in CORESETs configured by the network device for the terminal equipment, the first CORESET is configured to receive a PDCCH by using a first method, and the second CORESET is configured to receive a PDCCH by using a second method, wherein the first method and the second method are any of the methods for situations 2 to 4.

That is, the terminal equipment receives a PDCCH linked with one or two TCI state(s) in a first CORESET or CORESET pair according to configuration of the first CORESET or CORESET pair; and receives a PDCCH linked with one or two TCI state(s) in a second CORESET or CORESET pair according to configuration of the second CORESET or CORESET pair.

For example, one CORESET (or one CORESET pair) is not simply configured to one of the "not use a unified TCI" and "use a unified TCI"; when one CORESET is configured to receive a PDCCH by using the unified TCI, it is also configured to receive the PDCCH by using which one of the methods for the above situations 2 to 4. The CORESET pair here refers to two CORESETs linked with two PDCCH copies in a PDCCH repetition.

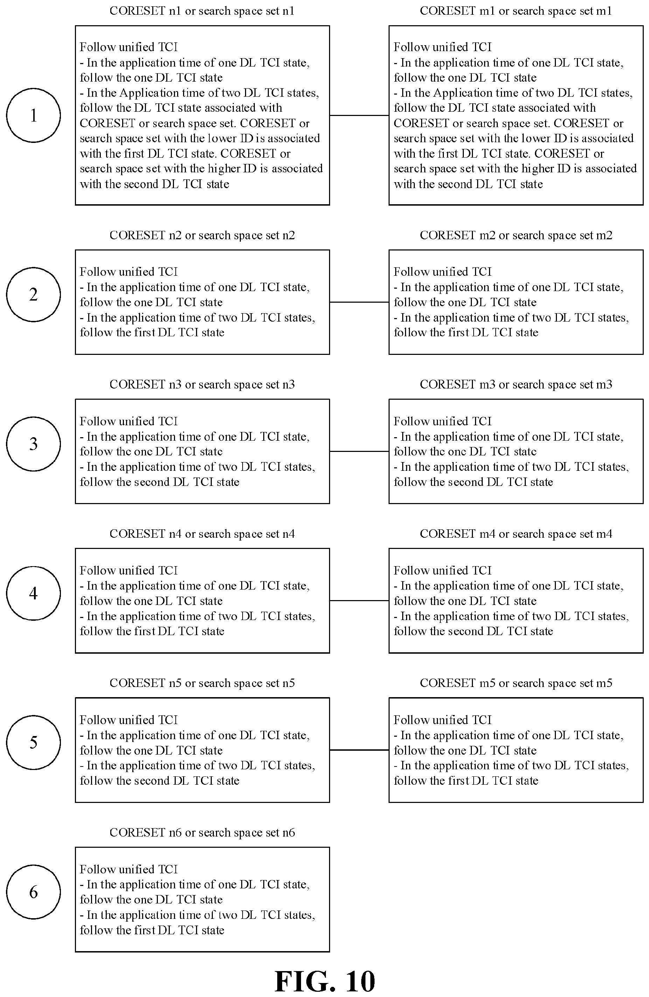

FIG. 10 is a schematic diagram of configuration of a CORESET. As shown in FIG. 10, one CORESET may be configured as any one of the six results in FIG. 10. Assuming that the first CORESET is configured to use the first method and the second CORESET is configured to use the second method, the terminal equipment may realize dynamic switching between the first method and the second method via blind detection of a PDCCH in two CORESETs. This provides a higher degree of freedom for PDCCH transmission at a network device side, and the network device may dynamically select a PDCCH transmission method that adapts to a current channel, to transmit a PDCCH.

FIG. 10 is just illustrative, the present disclosure does not limit on this, the first method and the second method may further be other combination.

Each of the above embodiments is only illustrative for the embodiments of the present disclosure, but the present disclosure is not limited to this, appropriate modifications may be further made based on the above each embodiment. For example, each of the above embodiments may be used individually, or one or more of the above embodiments may be combined.

As may be known from the above embodiments, for different combinations of a PDCCH type (PDCCH or PDCCH repetition) and the number of TCI states (one or two) within an application time, the terminal equipment receives some or all of the PDCCHs based on some or all of TCI states. Thereby, when the terminal equipment receives PDCCHs within application times of two TCI states or receives a PDCCH repetition within application times of one or two TCI state(s), occurrence of an undefined device behavior may be avoided, so as to avoid resulting PDCCH receiving failures.

### Embodiments of a second aspect

Embodiments of the present disclosure provide a signal transmission method, applied to a network device side, being processing on a network device side corresponding to the method in the embodiments of the first aspect, the same contents as the embodiments of the first aspect are not repeated.

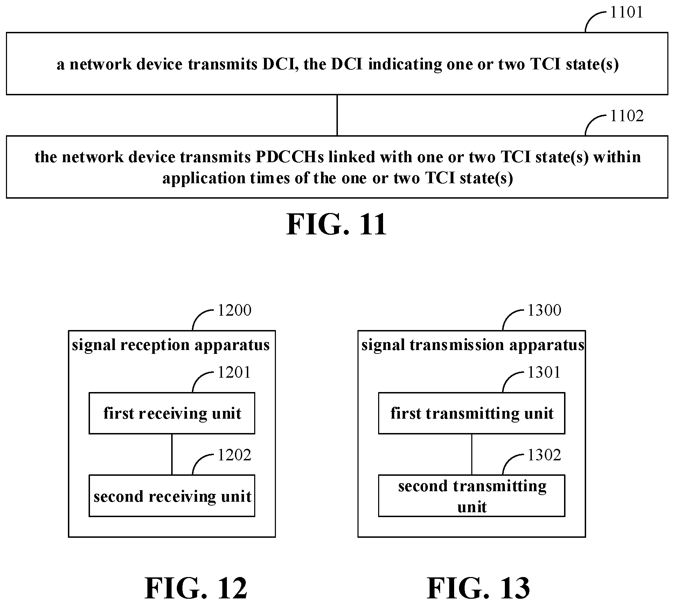

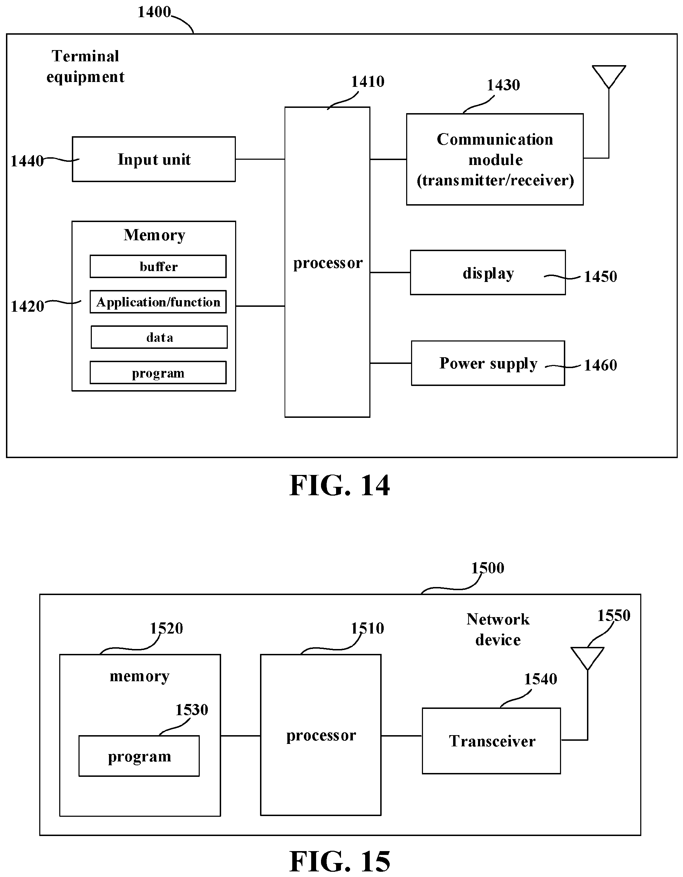

FIG. 11 is a schematic diagram of a signal transmission method in the embodiments of the present disclosure, as shown in FIG. 14, the method includes:
1101, a network device transmits DCI, the DCI indicating one or two TCI state(s); and
1102, the network device transmits PDCCHs linked with one or two TCI state(s) within application times of the one or two TCI state(s).

It should be noted that the above FIG. 11 is only schematic description of the embodiments of the present disclosure, but the present disclosure is not limited to this. For example, an execution step of each operation may be adjusted appropriately, moreover other some operations may be increased or operations therein may be reduced. Persons skilled in the art may make appropriate modifications according to the above contents, not limited to the records in the above FIG. 11.

In the embodiments of the present disclosure, in a case where a PDCCH uses a unified TCI, if the network device transmits the PDCCH within a certain application time, the network device should transmit the PDCCH based on a TCI state within the application time. However, it is possible that a situation may be occurred where the number of TCI states required to transmit the PDCCH is inconsistent with the number of TCI states within the application time (situations 2 to 4 as described above). In such situation, how to transmit the PDCCH based on a TCI state is unclear and undefined, which will result in an undefined device behavior, thereby causing PDCCH transmission failure.

According to the embodiments of the present disclosure, for different combinations of a PDCCH type (PDCCH or PDCCH repetition) and the number of TCI states (one or two) within an application time, the network device transmits some or all of the PDCCHs based on some or all of TCI states. Thereby, when the network device transmits PDCCHs within application times of two TCI states or transmits a PDCCH repetition within application times of one or two TCI state(s), occurrence of an undefined device behavior may be avoided, so as to avoid resulting PDCCH transmission failures.

In some embodiments, the PDCCH is a non-PDCCH repetition or a non-SFN PDCCH, and the PDCCH is located within application times of two TCI states, the network device transmits the PDCCH based on one of the two TCI states.

In the above embodiments, the one TCI state may be a pre-defined TCI state or a TCI state configured for a CORESET where the PDCCH is located.

In some other embodiments, the PDCCH is a non-PDCCH repetition or a non-SFN PDCCH, and the PDCCH is located within application times of two TCI states, the network device transmits the PDCCH based on the two TCI states in a manner of transmitting an SFN PDCCH.

In the above embodiments, the network device may transmit this PDCCH using a predefined SFN PDCCH scheme.

In some further embodiments, the PDCCH includes two PDCCH copies, and these two PDCCH copies are within an application time of one TCI state, the network device transmits these two PDCCH copies in two CORESETs linked with these two PDCCH copies based on one TCI state.

In some further embodiments, the PDCCH includes two PDCCH copies, and these two PDCCH copies are within an application time of one TCI state, the network device transmits one PDCCH copy in one of the two CORESETs linked with these two PDCCH copies based on one TCI state.

In the above embodiments, the one CORESET may refer to one of the following:
a CORESET with a smaller ID in the two CORESETs;
a CORESET with an earlier starting time in the two CORESETs; and
a CORESET with a lower starting frequency in the two CORESETs.

In some further embodiments, the PDCCH includes two PDCCH copies, and these two PDCCH copies are within application times of two TCI states, the network device transmits one PDCCH copy in a first CORESET based on a first TCI state in the two TCI states, and transmits the other PDCCH copy in a second CORESET based on a second TCI state in the two TCI states, wherein,
the first CORESET is one of the following:
a CORESET with a smaller ID in two CORESETs;
a CORESET with an earlier starting time in the two CORESETs; and
a CORESET with a lower starting frequency in the two CORESETs;
the second CORESET is one of the following:
   a CORESET with a larger ID in two CORESETs;
   a CORESET with a later starting time in the two CORESETs; and
   a CORESET with a higher starting frequency in the two CORESETs.

In some further embodiments, the PDCCH includes two PDCCH copies, and these two PDCCH copies are within application times of two TCI states, the network device transmits one PDCCH copy in a first CORESET based on a first TCI state in these two TCI states, and transmits the other PDCCH copy in a second CORESET based on a second TCI state in these two TCI states, wherein,
the first CORESET is configured to be linked with the first TCI state; and
the second CORESET is configured to be linked with the second TCI state.

In each of the above embodiments, the first TCI state is a TCI state with a smaller field ID or a smaller TCI state ID in an MAC CE; the second TCI state is a TCI state with a larger field ID or a larger TCI state ID in an MAC CE. The present disclosure is not limited to this.

In some further embodiments, the PDCCH includes two PDCCH copies, and these two PDCCH copies are within application times of two TCI states, the network device transmits these two PDCCH copies in two CORESETs linked with these two PDCCH copies based on one of these two TCI states.

In the above embodiments, the one TCI state may be a pre-defined TCI state or a TCI state configured for a CORESET where a PDCCH is located.

In each of the above embodiments, the two CORESETs linked with the two PDCCH copies both use a unified TCI, or both do not use a unified TCI. It may be configured by the network device, for example explicitly or implicitly configured, as mentioned in the embodiments of the first aspect.

In the embodiments of the present disclosure, the network device may further transmit a PDCCH linked with one or two TCI state(s) in a first CORESET or CORESET pair according to configuration of the first CORESET or CORESET pair; and transmits a PDCCH linked with one or two TCI state(s) in a second CORESET or CORESET pair according to configuration of the second CORESET or CORESET pair. Specifically, the network device may transmit a PDCCH using the method in each of the above embodiments, the contents of which are merged here and are not repeated here.

Each of the above embodiments is only illustrative for the embodiments of the present disclosure, but the present disclosure is not limited to this, appropriate modifications may be further made based on the above each embodiment. For example, each of the above embodiments may be used individually, or one or more of the above embodiments may be combined.

As may be known from the above embodiments, for different combinations of a PDCCH type (PDCCH or PDCCH repetition) and the number of TCI states (one or two) within an application time, the network device transmits some or all of the PDCCHs based on some or all of TCI states. Thereby, when the network device transmits PDCCHs within application times of two TCI states or transmits a PDCCH repetition within application times of one or two TCI state(s), occurrence of an undefined device behavior may be avoided, so as to avoid resulting PDCCH transmission failures.

### Embodiments of a third aspect

The embodiments of the present disclosure provide a signal reception apparatus. The apparatus for example may be a terminal equipment, or may be one or more parts or components configured in the terminal equipment. The contents same as the embodiments of the first to second aspects are not repeated.

FIG. 12 is a schematic diagram of a signal reception apparatus in the embodiments of the present disclosure. As shown in FIG. 12, the signal reception apparatus 1200 in the embodiments of the present disclosure includes:
a first receiving unit 1201 configured to receive DCI, the DCI indicating one or two TCI state(s); and
a second receiving unit 1202 configured to receive PDCCHs linked with one or two TCI state(s) within application times of the one or two TCI state(s).

In some embodiments, the PDCCH is a non-PDCCH repetition or a non-SFN PDCCH, and the PDCCH is located within application times of two TCI states, the second receiving unit 1202 receives the PDCCH based on one of the two TCI states.

In the above embodiments, the one TCI state is a pre-defined TCI state or a TCI state configured for a CORESET where the PDCCH is located.

In some embodiments, the PDCCH is a non-PDCCH repetition or a non-SFN PDCCH, and the PDCCH is located within application times of two TCI states, the second receiving unit 1202 receives the PDCCH based on the two TCI states in a manner of receiving an SFN PDCCH.

In the above embodiments, the second receiving unit 1202 may receive this PDCCH using a predefined SFN PDCCH scheme.

In some embodiments, the PDCCH includes two PDCCH copies, and these two PDCCH copies are within an application time of one TCI state, the second receiving unit 1202 receives two PDCCH copies in two CORESETs linked with the two PDCCH copies based on the one TCI state.

In some embodiments, the PDCCH includes two PDCCH copies, and these two PDCCH copies are within an application time of one TCI state, the second receiving unit 1202 receives one PDCCH copy in one of two CORESETs linked with the two PDCCH copies based on the one TCI state.

In the above embodiments, the one CORESET may refer to one of the following:
a CORESET with a smaller ID in the two CORESETs;
a CORESET with an earlier starting time in the two CORESETs; and
a CORESET with a lower starting frequency in the two CORESETs.

In some embodiments, the PDCCH includes two PDCCH copies, and these two PDCCH copies are within application times of two TCI states, the second receiving unit 1202 receives one PDCCH copy in a first CORESET based on one of the two TCI states (a first TCI state), and receives the other PDCCH copy in a second CORESET based on the other one of the two TCI states (a second TCI state), wherein,
the first CORESET is one of the following:
a CORESET with a smaller ID in two CORESETs;
a CORESET with an earlier starting time in the two CORESETs; and
a CORESET with a lower starting frequency in the two CORESETs;
the second CORESET is one of the following:
   a CORESET with a larger ID in two CORESETs;
   a CORESET with a later starting time in the two CORESETs; and
   a CORESET with a higher starting frequency in the two CORESETs.

In some embodiments, the PDCCH includes two PDCCH copies, and these two PDCCH copies are within application times of two TCI states, the second receiving unit 1202 receives one PDCCH copy in a first CORESET based on a first TCI state in the two TCI states, and receives the other PDCCH copy in a second CORESET based on a second TCI state in the two TCI states, wherein,
the first CORESET is configured to be linked with the first TCI state; and
the second CORESET is configured to be linked with the second TCI state.

In each of the above embodiments, the first TCI state is a TCI state with a smaller field ID or a smaller TCI state ID in an MAC CE; the second TCI state is a TCI state with a larger field ID or a larger TCI state ID in the MAC CE. The present disclosure is not limited to this.

In some embodiments, the PDCCH includes two PDCCH copies, and these two PDCCH copies are within application times of two TCI states, the second receiving unit 1202 receives two PDCCH copies in two CORESETs linked with the two PDCCH copies based on one of the two TCI states.

In the above embodiments, the one TCI state may be a pre-defined TCI state or a TCI state configured for a CORESET where a PDCCH is located.

In each of the above embodiments, the two CORESETs linked with the two PDCCH copies both use a unified TCI, or both do not use a unified TCI.

In some embodiments, the second receiving unit 1202 receives a PDCCH linked with one or two TCI state(s) in a first CORESET or CORESET pair according to configuration of the first CORESET or CORESET pair; and receives a PDCCH linked with one or two TCI state(s) in a second CORESET or CORESET pair according to configuration of the second CORESET or CORESET pair. Specifically, the second receiving unit 1202 may receive a PDCCH using the method in each of the above embodiments, which is not repeated here.

Each of the above embodiments is only illustrative for the embodiments of the present disclosure, but the present disclosure is not limited to this, appropriate modifications may be further made based on the above each embodiment. For example, each of the above embodiments may be used individually, or one or more of the above embodiments may be combined.

It's worth noting that the above only describes components or modules related to the present disclosure, but the present disclosure is not limited to this. The signal reception apparatus 1200 may further include other components or modules. For detailed contents of these components or modules, relevant technologies may be referred to.

Moreover, for the sake of simplicity, FIG. 12 only exemplarily shows a connection relationship or signal direction between components or modules, however persons skilled in the art should know that various relevant technologies such as bus connection may be used. The above components or modules may be realized by a hardware facility such as a processor, a memory, a transmitter, a receiver, etc. The embodiments of the present disclosure have no limitation to this.

As may be known from the above embodiments, for different combinations of a PDCCH type (PDCCH or PDCCH repetition) and the number of TCI states (one or two) within an application time, the terminal equipment receives some or all of the PDCCHs based on some or all of TCI states. Thereby, when the terminal equipment receives PDCCHs within application times of two TCI states or receives a PDCCH repetition within application times of one or two TCI state(s), occurrence of an undefined device behavior may be avoided, so as to avoid resulting PDCCH receiving failures.

### Embodiments of a fourth aspect

The embodiments of the present disclosure provide a signal transmission apparatus. The apparatus may be a network device, or may be one or more parts or components configured in the network device. The contents same as the embodiments of the first to third aspects are not repeated.

FIG. 13 is a schematic diagram of a signal transmission apparatus in the embodiments of the present disclosure. As shown in FIG. 13, the signal transmission apparatus 1300 in the embodiments of the present disclosure includes:
a first transmitting unit 1301 configured to transmit DCI, the DCI indicating one or two TCI state(s); and
a second transmitting unit 1302 configured to transmit PDCCHs linked with one or two TCI state(s) within application times of the one or two TCI state(s).

In some embodiments, the PDCCH is a non-PDCCH repetition or a non-SFN PDCCH, and the PDCCH is located within application times of two TCI states, the second transmitting unit 1302 transmits the PDCCH based on one of the two TCI states.

In the above embodiments, the one TCI state is a pre-defined TCI state or a TCI state configured for a CORESET where a PDCCH is located.

In some embodiments, the PDCCH is a non-PDCCH repetition or a non-SFN PDCCH, and the PDCCH is located within application times of two TCI states, the second transmitting unit 1302 transmits the PDCCH based on the two TCI states in a manner of transmitting an SFN PDCCH.

In the above embodiments, the second transmitting unit 1302 transmits this PDCCH using a predefined SFN PDCCH scheme.

In some embodiments, the PDCCH includes two PDCCH copies, and these two PDCCH copies are within an application time of one TCI state, the second transmitting unit 1302 transmits two PDCCH copies in two CORESETs linked with the two PDCCH copies based on the one TCI state.

In some embodiments, the PDCCH includes two PDCCH copies, and these two PDCCH copies are within an application time of one TCI state, the second transmitting unit 1302 transmits one PDCCH copy in one of two CORESETs linked with the two PDCCH copies based on the one TCI state.

In the above embodiments, the one CORESET may refer to one of the following:
a CORESET with a smaller ID in the two CORESETs;
a CORESET with an earlier starting time in the two CORESETs; and
a CORESET with a lower starting frequency in the two CORESETs.

In some embodiments, the PDCCH includes two PDCCH copies, and these two PDCCH copies are within application times of two TCI states, the second transmitting unit 1302 transmits one PDCCH copy in a first CORESET based on one of the two TCI states (a first TCI state), and transmits the other PDCCH copy in a second CORESET based on the other one of the two TCI states (a second TCI state), wherein,
the first CORESET is one of the following:
a CORESET with a smaller ID in two CORESETs;
a CORESET with an earlier starting time in the two CORESETs; and
a CORESET with a lower starting frequency in the two CORESETs;
the second CORESET is one of the following:
   a CORESET with a larger ID in two CORESETs;
   a CORESET with a later starting time in the two CORESETs; and
   a CORESET with a higher starting frequency in the two CORESETs.

In some embodiments, the PDCCH includes two PDCCH copies, and these two PDCCH copies are within application times of two TCI states, the second transmitting unit 1302 transmits one PDCCH copy in a first CORESET based on a first TCI state in the two TCI states, and transmits the other PDCCH copy in a second CORESET based on a second TCI state in the two TCI states, wherein,
the first CORESET is configured to be linked with the first TCI state; and
the second CORESET is configured to be linked with the second TCI state.

In each of the above embodiments, the first TCI state is a TCI state with a smaller field ID or a smaller TCI state ID in an MAC CE; the second TCI state is a TCI state with a larger field ID or a larger TCI state ID in the MAC CE. The present disclosure is not limited to this.

In some embodiments, the PDCCH includes two PDCCH copies, and these two PDCCH copies are within application times of two TCI states, the second transmitting unit 1302 transmits two PDCCH copies in two CORESETs linked with the two PDCCH copies based on one of the two TCI states.

In the above embodiments, one TCI state may be a pre-defined TCI state or a TCI state configured for a CORESET where a PDCCH is located.

In each of the above embodiments, the two CORESETs linked with the two PDCCH copies may both use a unified TCI, or both do not use a unified TCI.

In some embodiments, the second transmitting unit 1302 transmits a PDCCH linked with one or two TCI state(s) in a first CORESET or CORESET pair according to configuration of the first CORESET or CORESET pair; and transmits a PDCCH linked with one or two TCI state(s) in a second CORESET or CORESET pair according to configuration of the second CORESET or CORESET pair. Specifically, the second transmitting unit 1302 may transmit a PDCCH using the method in each of the above embodiments, which is not repeated here.

Each of the above embodiments is only illustrative for the embodiments of the present disclosure, but the present disclosure is not limited to this, appropriate modifications may be further made based on the above each embodiment. For example, each of the above embodiments may be used individually, or one or more of the above embodiments may be combined.

It's worth noting that the above only describes components or modules related to the present disclosure, but the present disclosure is not limited to this. The signal transmission apparatus 1300 may further include other components or modules. For detailed contents of these components or modules, relevant technologies may be referred to.

Moreover, for the sake of simplicity, FIG. 13 only exemplarily shows a connection relationship or signal direction between components or modules, however persons skilled in the art should know that various relevant technologies such as bus connection may be used. The above components or modules may be realized by a hardware facility such as a processor, a memory, a transmitter, a receiver, etc. The embodiments of the present disclosure have no limitation to this.

As may be known from the above embodiments, for different combinations of a PDCCH type (PDCCH or PDCCH repetition) and the number of TCI states (one or two) within an application time, the network device transmits some or all of the PDCCHs based on some or all of TCI states. Thereby, when the network device transmits PDCCHs within application times of two TCI states or transmits a PDCCH repetition within application times of one or two TCI state(s), occurrence of an undefined device behavior may be avoided, so as to avoid resulting PDCCH transmission failures.

### Embodiments of a fifth aspect

The embodiments of the present disclosure further provide a communication system, FIG.1 may be referred to, the contents same as the embodiments of the first to fourth aspects are not repeated.

In some embodiments, the communication system 100 may at least include a network device and a terminal equipment, wherein the network device may transmit DCI, the DCI indicating one or two TCI state(s), in addition, the network device may further transmit a PDCCH linked with one or two TCI state(s) within application time(s) of the one or two TCI state(s); the terminal equipment receives the DCI and receives the PDCCH linked with one or two TCI state(s) within application time(s) of the one or two TCI state(s).

Contents about the network device and the terminal equipment have been described in detail in the embodiments of the first to fourth aspects, which are incorporated here, and are not repeated here.

The embodiments of the present disclosure further provide a terminal equipment, but the present disclosure is not limited to this, it may also be other device.

FIG. 14 is a schematic diagram of a terminal equipment in the embodiments of the present disclosure. As shown in FIG. 14, the terminal equipment 1400 may include a processor 1410 and a memory 1420; the memory 1420 stores data and programs, and is coupled to the processor 1410. It's worth noting that this figure is exemplary; other types of structures can also be used to supplement or replace this structure, so as to realize a telecommunication function or other functions.

For example, the processor 1410 may be configured to execute a program to implement the method as described in the embodiments of the first aspect. For example, the processor 1410 may be configured to perform the following control: receiving DCI, the DCI indicating one or two TCI state(s); receiving a PDCCH linked with one or two TCI state(s) within application time(s) of the one or two TCI state(s).

As shown in FIG. 14, the terminal equipment 1400 may further include: a communication module 1430, an input unit 1440, a display 1450 and a power supply 1460. The functions of said components are similar to related arts, which are not repeated here. It's worth noting that the terminal equipment 1400 does not have to include all the components shown in FIG. 14, said components are not indispensable. Moreover, the terminal equipment 1400 may further include components not shown in FIG. 14, related arts may be referred to.

The embodiments of the present disclosure further provide a network device, for example may be a base station, but the present disclosure is not limited to this, it may also be other network device.

FIG. 15 is a composition schematic diagram of a network device in the embodiments of the present disclosure. As shown in FIG. 15, the network device 1500 may include: a processor 1510 (such as a central processing unit (CPU)) and a memory 1520; the memory 1520 is coupled to the processor 1510. The memory 1520 may store various data; moreover, also stores a program 1530 for information processing, and executes the program 1530 under the control of the processor 1510.

For example, the processor 1510 can be configured to execute a program to implement the method as described in the embodiments of the second aspect. For example, the processor 1510 may be configured to perform the following control: transmitting DCI, the DCI indicating one or two TCI state(s); transmitting a PDCCH linked with one or two TCI state(s) within application time(s) of the one or two TCI state(s).

In addition, as shown in FIG. 15, the network device 1500 may further include: a transceiver 1540 and an antenna 1550, etc.; wherein the functions of said components are similar to relevant arts, which are not repeated here. It's worth noting that the network device 1500 does not have to include all the components shown in FIG. 15. Moreover, the network device 1500 may further include components not shown in FIG. 15, related arts may be referred to.

The embodiments of the present disclosure further provide a computer program, wherein when a terminal equipment executes the program, the program enables the terminal equipment to execute the method described in the embodiments of the first aspect.

The embodiments of the present disclosure further provide a storage medium in which a computer program is stored, wherein the computer program enables a terminal equipment to execute the method described in the embodiments of the first aspect.

The embodiments of the present disclosure further provide a computer program, wherein when a network device executes the program, the program enables the network device to execute the method described in the embodiments of the second aspect.

The embodiments of the present disclosure further provide a storage medium in which a computer program is stored, wherein the computer program enables a network device to execute the method described in the embodiments of the second aspect.

The apparatus and method in the present disclosure may be realized by hardware, or may be realized by combining hardware with software. The present disclosure relates to such a computer readable program, when the program is executed by a logic component, the computer readable program enables the logic component to realize the apparatus described in the above text or a constituent component, or enables the logic component to realize various methods or steps described in the above text. The present disclosure further relates to a storage medium storing the program, such as a hard disk, a magnetic disk, an optical disk, a DVD, a flash memory and the like.

By combining with the method/apparatus described in the embodiments of the present disclosure, it may be directly reflected as hardware, a software executed by a processor, or a combination of the two. For example, one or more in the functional block diagram or one or more combinations in the functional block diagram as shown in the drawings may correspond to software modules of a computer program flow, and may also correspond to hardware modules. These software modules may respectively correspond to the steps as shown in the drawings. These hardware modules may be realized by solidifying these software modules e.g. using a field-programmable gate array (FPGA).

A software module may be located in a RAM memory, a flash memory, a ROM memory, an EPROM memory, an EEPROM memory, a register, a hard disk, a mobile magnetic disk, a CD-ROM or a storage medium in any other form as known in this field. A storage medium may be coupled to a processor, thereby enabling the processor to read information from the storage medium, and to write the information into the storage medium; or the storage medium may be a constituent part of the processor. The processor and the storage medium may be located in an ASIC. The software module may be stored in a memory of a mobile terminal, and may also be stored in a memory card of the mobile terminal. For example, if a device (such as the mobile terminal) adopts a MEGA-SIM card with a larger capacity or a flash memory apparatus with a large capacity, the software module may be stored in the MEGA-SIM card or the flash memory apparatus with a large capacity.

One or more in the functional block diagram or one or more combinations in the functional block diagram as described in the drawings may be implemented as a general-purpose processor for performing the functions described in the present disclosure, a digital signal processor (DSP), an application-specific integrated circuit (ASIC), a field-programmable gate array (FPGA) or other programmable logic device, discrete gate or transistor logic device, discrete hardware components or any combination thereof. One or more in the functional block diagram or one or more combinations in the functional block diagram as described in the drawings may further be implemented as a combination of computer equipments, such as a combination of a DSP and a microprocessor, a plurality of microprocessors, one or more microprocessors combined and communicating with the DSP or any other such configuration.

The present disclosure is described by combining with the specific implementations, however persons skilled in the art should clearly know that these descriptions are exemplary and do not limit the protection scope of the present disclosure. Persons skilled in the art may make various variations and modifications to the present disclosure according to the principle of the present disclosure, these variations and modifications are also within the scope of the present disclosure.

As for the implementations including the above embodiments, the following supplements are further disclosed:
1. A signal reception method, wherein the method includes:
   a terminal equipment receives DCI, the DCI indicating one or two TCI state(s); and
   the terminal equipment receives PDCCHs linked with one or two TCI state(s) within application times of the one or two TCI state(s).
2. The method according to Supplement 1, wherein the method includes:
   the terminal equipment receives a PDCCH linked with one or two TCI state(s) in a first CORESET or CORESET pair according to configuration of the first CORESET or CORESET pair; and
   the terminal equipment receives a PDCCH linked with one or two TCI state(s) in a second CORESET or CORESET pair according to configuration of the second CORESET or CORESET pair.
3. The method according to Supplement 1 or 2, wherein the PDCCH is a non-PDCCH repetition or a non-SFN PDCCH, the PDCCH is located within application times of two TCI states, the terminal equipment receives the PDCCH based on one of the two TCI states.
4. The method according to Supplement 3, wherein
   the one TCI state is a pre-defined TCI state or a TCI state configured for a CORESET where the PDCCH is located.
5. The method according to Supplement 1 or 2, wherein the PDCCH is a non-PDCCH repetition or a non-SFN PDCCH, the PDCCH is located within application times of two TCI states, the terminal equipment receives the PDCCH based on the two TCI states in a manner of receiving an SFN PDCCH.
6. The method according to Supplement 5, wherein the terminal equipment receives the PDCCH using a predefined SFN PDCCH scheme.
7. The method according to Supplement 1 or 2, wherein the PDCCH includes two PDCCH copies, the two PDCCH copies are within an application time of one TCI state, the terminal equipment receives two PDCCH copies in two CORESETs linked with the two PDCCH copies based on the one TCI state.
8. The method according to Supplement 1 or 2, wherein the PDCCH includes two PDCCH copies, the two PDCCH copies are within an application time of one TCI state, the terminal equipment receives one PDCCH copy in one of two CORESETs linked with the two PDCCH copies based on the one TCI state.
9. The method according to Supplement 8, wherein the one CORESET refers to one of the following:
   a CORESET with a smaller ID in the two CORESETs;
   a CORESET with an earlier starting time in the two CORESETs; and
   a CORESET with a lower starting frequency in the two CORESETs.
10. The method according to Supplement 1 or 2, wherein the PDCCH includes two PDCCH copies, the two PDCCH copies are within application times of two TCI states, the terminal equipment receives one PDCCH copy in a first CORESET based on a first TCI state in the two TCI states, and receive the other PDCCH copy in a second CORESET based on a second TCI state in the two TCI states, wherein
   the first CORESET is one of the following:
   a CORESET with a smaller ID in two CORESETs;
   a CORESET with an earlier starting time in the two CORESETs; and
   a CORESET with a lower starting frequency in the two CORESETs;
   the second CORESET is one of the following:
      a CORESET with a larger ID in two CORESETs;
      a CORESET with a later starting time in the two CORESETs; and
      a CORESET with a higher starting frequency in the two CORESETs.
11. The method according to Supplement 1 or 2, wherein the PDCCH includes two PDCCH copies, the two PDCCH copies are within application times of two TCI states, the terminal equipment receives one PDCCH copy in a first CORESET based on a first TCI state in the two TCI states, and receive the other PDCCH copy in a second CORESET based on a second TCI state in the two TCI states, wherein
   the first CORESET is configured to be linked with the first TCI state; and
   the second CORESET is configured to be linked with the second TCI state.
12. The method according to Supplement 10 or 11, wherein
   the first TCI state is a TCI state with a smaller field ID or a smaller TCI state ID in an MAC CE; and
   the second TCI state is a TCI state with a larger field ID or a larger TCI state ID in an MAC CE.
13. The method according to Supplement 1 or 2, wherein the PDCCH includes two PDCCH copies, the two PDCCH copies are within application times of two TCI states, the terminal equipment receives the two PDCCH copies in two CORESETs linked with the two PDCCH copies based on one of the two TCI states.
14. The method according to Supplement 13, wherein
   the one TCI state is a pre-defined TCI state or a TCI state configured for a CORESET where the PDCCH is located.
15. The method according to Supplement 1 or 2, wherein the PDCCH includes two PDCCH copies, two CORESETs linked with the two PDCCH copies both use a unified TCI, or both do not use a unified TCI.
16. A signal transmission method, wherein the method includes:
   a network device transmits DCI, the DCI indicating one or two TCI state(s); and
   the network device transmits PDCCHs linked with one or two TCI state(s) within application times of the one or two TCI state(s).
17. The method according to Supplement 16, wherein the method includes:
   the network device transmits a PDCCH linked with one or two TCI state(s) in a first CORESET or CORESET pair according to configuration of the first CORESET or CORESET pair; and
   the network device transmits a PDCCH linked with one or two TCI state(s) in a second CORESET or CORESET pair according to configuration of the second CORESET or CORESET pair.
18. The method according to Supplement 16 or 17, wherein the PDCCH is a non-PDCCH repetition or a non-SFN PDCCH, the PDCCH is located within application times of two TCI states, the network device transmits the PDCCH based on one of the two TCI states.
19. The method according to Supplement 18, wherein
   the one TCI state is a pre-defined TCI state or a TCI state configured for a CORESET where the PDCCH is located.
20. The method according to Supplement 16 or 17, wherein the PDCCH is a non-PDCCH repetition or a non-SFN PDCCH, the PDCCH is located within application times of two TCI states, the network device transmits the PDCCH based on the two TCI states in a manner of transmitting an SFN PDCCH.
21. The method according to Supplement 20, wherein the network device transmits the PDCCH using a predefined SFN PDCCH scheme.
22. The method according to Supplement 16 or 17, wherein the PDCCH includes two PDCCH copies, the two PDCCH copies are within an application time of one TCI state, the network device transmits two PDCCH copies in two CORESETs linked with the two PDCCH copies based on the one TCI state.
23. The method according to Supplement 16 or 17, wherein the PDCCH includes two PDCCH copies, the two PDCCH copies are within an application time of one TCI state, the network device transmits one PDCCH copy in one of two CORESETs linked with the two PDCCH copies based on the one TCI state.
24. The method according to Supplement 23, wherein the one CORESET refers to one of the following:
   a CORESET with a smaller ID in the two CORESETs;
   a CORESET with an earlier starting time in the two CORESETs; and
   a CORESET with a lower starting frequency in the two CORESETs.
25. The method according to Supplement 16 or 17, wherein the PDCCH includes two PDCCH copies, the two PDCCH copies are within application times of two TCI states, the network device transmits one PDCCH copy in a first CORESET based on a first TCI state in the two TCI states, and transmits the other PDCCH copy in a second CORESET based on a second TCI state in the two TCI states, wherein
   the first CORESET is one of the following:
   a CORESET with a smaller ID in two CORESETs;
   a CORESET with an earlier starting time in the two CORESETs; and
   a CORESET with a lower starting frequency in the two CORESETs;
   the second CORESET is one of the following:
      a CORESET with a larger ID in two CORESETs;
      a CORESET with a later starting time in the two CORESETs; and
      a CORESET with a higher starting frequency in the two CORESETs.
26. The method according to Supplement 16 or 17, wherein the PDCCH includes two PDCCH copies, the two PDCCH copies are within application times of two TCI states, the network device transmits one PDCCH copy in a first CORESET based on a first TCI state in the two TCI states, and transmits the other PDCCH copy in a second CORESET based on a second TCI state in the two TCI states, wherein
   the first CORESET is configured to be linked with the first TCI state; and
   the second CORESET is configured to be linked with the second TCI state.
27. The method according to Supplement 25 or 26, wherein
   the first TCI state is a TCI state with a smaller field ID or a smaller TCI state ID in an MAC CE; and
   the second TCI state is a TCI state with a larger field ID or a larger TCI state ID in an MAC CE.
28. The method according to Supplement 16 or 17, wherein the PDCCH includes two PDCCH copies, the two PDCCH copies are within application times of two TCI states, the network device transmits the two PDCCH copies in two CORESETs linked with the two PDCCH copies based on one of the two TCI states.
29. The method according to Supplement 28, wherein
   the one TCI state is a pre-defined TCI state or a TCI state configured for a CORESET where the PDCCH is located.
30. The method according to Supplement 16 or 17, wherein the PDCCH includes two PDCCH copies, two CORESETs linked with the two PDCCH copies both use a unified TCI, or both do not use a unified TCI.
31. A terminal equipment, comprising a memory and a processor, the memory storing a computer program, and the processor being configured to execute the computer program to implement the method according to any one of Supplements 1 to 15.
32. A network device, comprising a memory and a processor, the memory storing a computer program, and the processor being configured to execute the method according to any one of Supplements 16 to 30.
33. A communication system, comprising a network device and a terminal equipment, wherein:
   the network device is configured to transmit DCI, and transmit PDCCHs linked with one or two TCI state(s) within application times of the one or two TCI state(s) indicated by the DCI; and
   the terminal equipment is configured to receive the DCI, and receive PDCCHs linked with one or two TCI state(s) within application times of the one or two TCI state(s) indicated by the DCI.

## Claims

1. A signal reception apparatus, configured in a terminal equipment, wherein the apparatus comprises:
a first receiving unit configured to receive downlink control information, the downlink control information indicating one or two transmission configuration indication states; and
a second receiving unit configured to receive physical downlink control channels linked with one or two transmission configuration indication states within application times of the one or two transmission configuration indication states.

2. The apparatus according to claim 1, wherein the physical downlink control channel is a non-PDCCH repetition or non-SFN PDCCH and is located within application times of two transmission configuration indication states, and the second receiving unit receives the physical downlink control channel based on one transmission configuration indication state in the two transmission configuration indication states.

3. The apparatus according to claim 2, wherein,
the one transmission configuration indication state is a predefined transmission configuration indication state, or a transmission configuration indication state configured for a control resource set where the physical downlink control channel is located.

4. The apparatus according to claim 1, wherein the physical downlink control channel comprises two physical downlink control channel copies, the two physical downlink control channel copies being within an application time of one transmission configuration indication state, and the second receiving unit receives the two physical downlink control channel copies in two control resource sets linked with the two physical downlink control channel copies based on the one transmission configuration indication state.

5. The apparatus according to claim 1, wherein the physical downlink control channel comprises two physical downlink control channel copies, the two physical downlink control channel copies being within application times of two transmission configuration indication states, and the second receiving unit receives one of the two physical downlink control channel copies in a first control resource set based on a first transmission configuration indication state in the two transmission configuration indication states, and receives the other one of the two physical downlink control channel copies in a second control resource set based on a second transmission configuration indication state in the two transmission configuration indication states, wherein,
the first control resource set is one of the following:
a control resource set with a smaller ID in two control resource sets;
a control resource set with an earlier starting time in two control resource sets; and
a control resource set with a lower starting frequency in two control resource sets;
the second control resource set is one of the following:
a control resource set with a larger ID in two control resource sets;
a control resource set with a later starting time in two control resource sets; and
a control resource set with a higher starting frequency in two control resource sets.

6. The apparatus according to claim 5, wherein,
the first transmission configuration indication state is a transmission configuration indication state with a smaller field ID or a smaller transmission configuration indication state ID in a media access control control element; and
the second transmission configuration indication state is a transmission configuration indication state with a larger field ID or a larger transmission configuration indication state ID in a media access control control element.

7. The apparatus according to claim 1, wherein the physical downlink control channel comprises two physical downlink control channel copies, both of two control resource sets linked with the two physical downlink control channel copies using a unified transmission configuration indication, or neither of them using a unified transport configuration indication.

8. The apparatus according to claim 1, wherein the physical downlink control channel comprises two physical downlink control channel copies, the two physical downlink control channel copies being within application times of two transmission configuration indication states, and the second receiving unit receives one of the two physical downlink control channel copies in a first control resource set based on a first transmission configuration indication state in the two transmission configuration indication states, and receives the other one of the two physical downlink control channel copies in a second control resource set based on a second transmission configuration indication state in the two transmission configuration indication states, wherein,
the first control resource set is configured to be linked with the first transmission configuration indication state; and
the second control resource set is configured to be linked with the second transmission configuration indication state.

9. The apparatus according to claim 8, wherein,
the first transmission configuration indication state is a transmission configuration indication state with a smaller field ID or a smaller transmission configuration indication state ID in a media access control control element; and
the second transmission configuration indication state is a transmission configuration indication state with a larger field ID or a larger transmission configuration indication state ID in a media access control control element.

10. The apparatus according to claim 1, wherein,
the second receiving unit receives a physical downlink control channel linked with one or two transmission configuration indication state(s) in a first control resource set or a control resource set pair according to configuration of the first control resource set or the control resource set pair; and
the second receiving unit receives a physical downlink control channel linked with one or two transmission configuration indication state(s) in a second control resource set or a control resource set pair according to configuration of the second control resource set or the control resource set pair.

11. A signal transmission apparatus, configured in a network device, wherein the apparatus comprises:
a first transmitting unit configured to transmit downlink control information, the downlink control information indicating one or two transmission configuration indication states; and
a second transmitting unit configured to transmit physical downlink control channels linked with one or two transmission configuration indication states within application times of the one or two transmission configuration indication states.

12. The apparatus according to claim 11, wherein the physical downlink control channel is a non-PDCCH repetition or non-SFN PDCCH and is located within application times of two transmission configuration indication states, and the second transmitting unit transmits the physical downlink control channel based on one transmission configuration indication state in the two transmission configuration indication states.

13. The apparatus according to claim 12, wherein,
the one transmission configuration indication state is a predefined transmission configuration indication state, or a transmission configuration indication state configured for a control resource set where the physical downlink control channel is located.

14. The apparatus according to claim 11, wherein the physical downlink control channel comprises two physical downlink control channel copies, the two physical downlink control channel copies being within an application time of one transmission configuration indication state, and the second transmitting unit transmits the two physical downlink control channel copies in two control resource sets linked with the two physical downlink control channel copies based on the one transmission configuration indication state.

15. The apparatus according to claim 11, wherein the physical downlink control channel comprises two physical downlink control channel copies, the two physical downlink control channel copies being within application times of two transmission configuration indication states, and the second transmitting unit transmits one of the two physical downlink control channel copies in a first control resource set based on a first transmission configuration indication state in the two transmission configuration indication states, and transmits the other one of the two physical downlink control channel copies in a second control resource set based on a second transmission configuration indication state in the two transmission configuration indication states, wherein,
the first control resource set is one of the following:
a control resource set with a smaller ID in two control resource sets;
a control resource set with an earlier starting time in two control resource sets; and
a control resource set with a lower starting frequency in two control resource sets;
the second control resource set is one of the following:
a control resource set with a larger ID in two control resource sets;
a control resource set with a later starting time in two control resource sets; and
a control resource set with a higher starting frequency in two control resource sets.

16. The apparatus according to claim 15, wherein,
the first transmission configuration indication state is a transmission configuration indication state with a smaller field ID or a smaller transmission configuration indication state ID in a media access control control element; and
the second transmission configuration indication state is a transmission configuration indication state with a larger field ID or a larger transmission configuration indication state ID in a media access control control element.

17. The apparatus according to claim 11, wherein the physical downlink control channel comprises two physical downlink control channel copies, both of two control resource sets linked with the two physical downlink control channel copies using a unified transmission configuration indication, or neither of them using a unified transport configuration indication.

18. The apparatus according to claim 11, wherein the physical downlink control channel comprises two physical downlink control channel copies, the two physical downlink control channel copies being within application times of two transmission configuration indication states, and the second transmitting unit transmits one of the two physical downlink control channel copies in a first control resource set based on a first transmission configuration indication state in the two transmission configuration indication states, and transmits the other one of the two physical downlink control channel copies in a second control resource set based on a second transmission configuration indication state in the two transmission configuration indication states, wherein,
the first control resource set is configured to be linked with the first transmission configuration indication state; and
the second control resource set is configured to be linked with the second transmission configuration indication state.

19. The apparatus according to claim 11, wherein,
the second transmitting unit transmits a physical downlink control channel linked with one or two transmission configuration indication state(s) in a first control resource set or a control resource set pair according to configuration of the first control resource set or the control resource set pair; and
the second transmitting unit transmits a physical downlink control channel linked with one or two transmission configuration indication state(s) in a second control resource set or a control resource set pair according to configuration of the second control resource set or the control resource set pair.

20. A communication system, comprising a network device and a terminal equipment, wherein:
the network device is configured to transmit downlink control information, and transmit a physical downlink control channel linked with one or two transmission configuration indication states within application times of the one or two transmission configuration indication state(s) indicated by the downlink control information; and
the terminal equipment is configured to receive the downlink control information, and receive a physical downlink control channel linked with one or two transmission configuration indication states within application times of the one or two transmission configuration indication state(s) indicated by the downlink control information.
